# EUROPEAN PATENT APPLICATION

(11) **EP 0 684 065 A2**
(43) Date of publication of application: **29.11.1995**
(21) Application number: 95107259.4
(22) Date of filing: 12.05.1995
(51) Int. Cl.: B01D 46/42, F02M 33/02

(54) **Filter apparatus for recovering vapour from the fuel in a vehicle**

(30) Priority: 24.05.1994 IT TO940113 U
(71) Applicant: DAYCO EUROPE S.p.A., I-10123 Torino (IT)
(72) Inventor: Fiorio, Luigino, I-10015 Ivrea (IT)
(74) Representative: Jorio, Paolo

(57) **Abstract**

Filter apparatus (1) in which a filter (2) having an outer casing (3) and adapted to condense the fuel vapour to form a mass of liquid fuel is connectable to the vehicle body by a U-shaped bracket (12) having a pair of arms (13) which end in respective elongate bodies (15) snap-engaged in respective seats (7) in the outer casing of the filter (2) itself; the mass of liquid fuel resulting from the vapour is withdrawn from the filter (2) under the control of a solenoid valve (27) which is connected directly to the casing (3) by a snap-attachment device (30) having a guide member (31) integral with the outer casing (3) and a slide member (32) carried by the solenoid valve (27).

## Description

The present invention relates to filter apparatus for recovering vapour from the fuel in a vehicle.

In vehicles in general, and in catalysed vehicles in particular, it is known to use filter apparatus to recover vapour which forms in the vehicle tank as it is emptied of fuel and/or as a result of high temperatures, the filter apparatus being adapted to be housed in the engine compartment and to be connected rigidly to the vehicle body.

Known filter apparatus usually includes a filter commonly known commercially as a canister for condensing the fuel vapour coming from the tank so as to form a corresponding mass of liquid fuel and a solenoid valve which is connected to an outlet of the filter for enabling the mass of fuel to be withdrawn from the filter itself.

In known filter apparatus, the filter and its solenoid valve are connected to the body by a single metal bracket comprising a collar which, is tightened around the outer casing of the filter by means of one or more screws, and an appendage which in turn comprises two or more arms rigidly fixed at respective ends to the collar, generally by welding, and rigidly interconnected at their opposite ends by a cross-member which is adapted to be fixed releasably to the vehicle body, in use.

The bracket further includes an additional plate-shaped appendage having a free end portion to which is connected the solenoid valve which projects laterally from the appendage on the opposite side from the filter.

The known apparatus of the type described above suffers above all from the disadvantage of being rather bulky as a result of the particular geometry of the bracket and more particularly, the arrangement of the solenoid valve relative to the filter.

The known apparatus also suffers from the further problem of being relatively heavy since, to the weight of the filter must be added the weight of the bracket which is far from negligible, particularly because it is made entirely from ferrous material.

Finally, in the known apparatus of the type described above, the connection of the bracket to the filter takes rather a long time and, in any case, the connection is insecure and not very reliable since the force with which the collar is tightened around the filter varies with the force applied to the screw or screws by the workman and is sensitive to the vibration in the presence of which the filter apparatus must operate in almost all cases.

The object of the present invention is to provide filter apparatus which enables the problems explained above to be solved and which is, at the same time, simple and cheap to manufacture.

According to the present invention there is provided filter apparatus for recovering vapour from the fuel in a vehicle, the apparatus comprising a filter member for condensing the vapour to form a corresponding quantity of liquid fuel, having an outer casing and connection means for connecting the filter member to a vehicle body, the connection means including a bracket adapted to be fixed rigidly to the body and having at least one pair of support arms, characterised in that the connection means further include rapid attachment means interposed between the arms and the casing to connect the casing itself to the bracket in a releasable manner.

Preferably the apparatus defined above includes a solenoid valve for enabling the mass of liquid fuel to be withdrawn from the filter member in use and further connection means for connecting the solenoid valve itself directly to the outer casing in a releasable manner; the further connection means being snap-engagement means.

The invention will now be described with reference to the appended drawings which illustrate a non-limitative embodiment thereof, in which:
Figure 1 is an exploded perspective view of the filter apparatus according to the present invention showing its constituent elements;

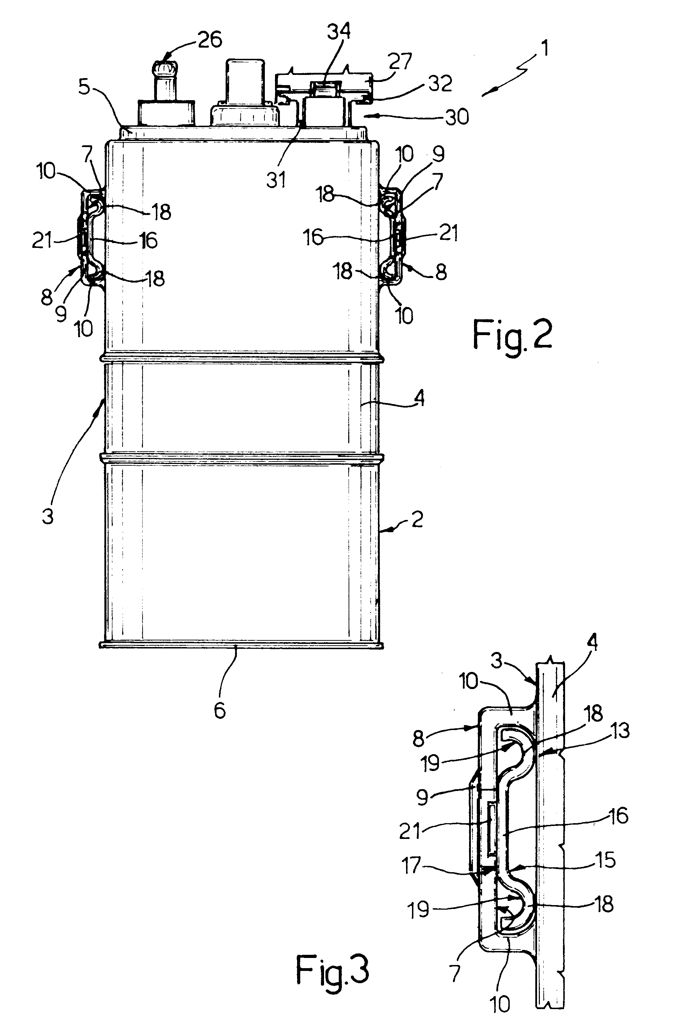

Figure 2 is a side elevational view of the apparatus of Figure 1;
Figure 3 is a view of a detail of Figure 2 on an enlarged scale;

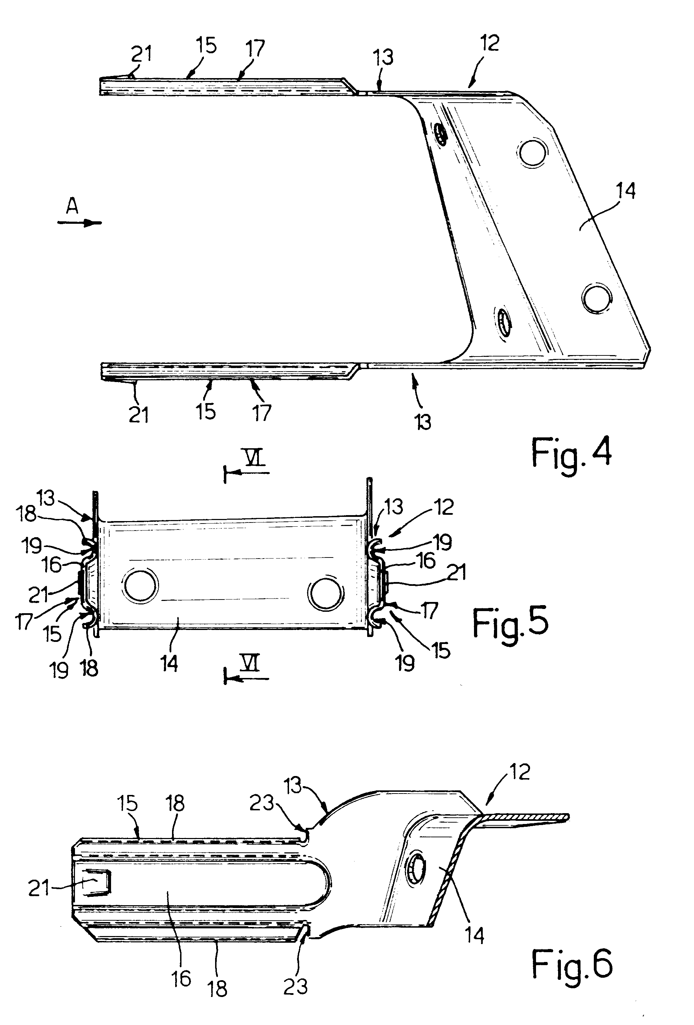

Figure 4 is a plan view of a detail of Figure 1;
Figure 5 is a view taken on the arrow A of Figure 4; and
Figure 6 is a section taken on the line VI-VI of Figure 5.

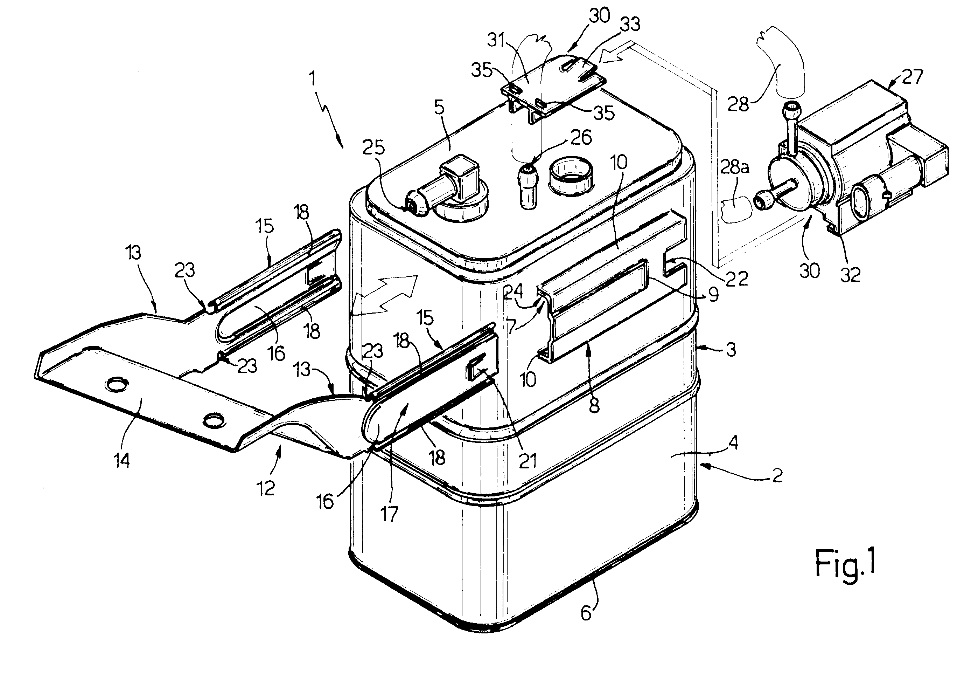

Figure 1 shows filter apparatus 1 for the recovery of vapour resulting from the evaporation of fuel housed in the tank of a vehicle (not illustrated). The apparatus 1 includes a filter 2 commonly known commercially as a canister which, in turn, comprises an outer box-shaped casing 3 with a peripheral wall 4 and a pair of end walls 5 and 6 which are substantially flat and parallel to each other and located so as to close opposite ends of the peripheral wall 4.

Still with reference to Figure 1, a pair of lateral seats 7 is formed on the peripheral wall 4 of the filter 2, being located in diametrally opposite positions on the wall 4 itself and each being defined by a respective elongate body 8 of U-section connected to the wall 4 so as to project therefrom. More particularly, each U-section body 8 includes a substantially flat central wall 9 extending parallel to a corresponding portion of the peripheral wall 4 of the casing 3 and a pair of flanges 10 which are parallel to each other and to the walls 5 and 6 and extend perpendicularly to the wall 9 from the peripheral wall 4 and are integral with the wall 4 itself.

The filter 2 can be connected to a vehicle body (not illustrated) by a support bracket 12 which is preferably of metal, is U-shaped and includes a pair of arms 13 and a cross-member 14 which is integral with respective end portions of the arms 13 and is adapted to be connected to the vehicle body (not illustrated) in known manner.

The arms 13 extend in facing, parallel positions and each carries, at its end opposite the cross-member 14, an elongate body 15 slidably engageable in a respective seat 7. More particularly, each body 15 is constituted by a respective shaped plate including an elongate central portion 16 having a flat outer surface 17 and two identical C-shaped edge portions 18 each defining a respective channel 19 which is open on the same side as the surface 17. Each of the edge portions 18 is recessed towards the other body 15 so that its longitudinal free edge is spaced from a plane passing through the respective surface 17.

Each portion 16 has a resilient tooth 21 which extends outwardly from the respective surface 17 and is adapted, in use, to snap engage in a respective retaining seat 22 (Figure 1) in the wall 9 of the U-section body 8 so as, still in use, to keep a pair of first shoulders 23 on the respective arm 13 in contact with a second shoulder 24 defined by an end edge of the U-section body 8.

Still with reference to Figure 1, the casing 3 houses a known condenser unit, not visible in the appended drawings, for condensing vapour to form a corresponding mass of liquid fuel in use. The casing 3 has an inlet aperture 25 formed in the wall 5 and an outlet aperture 26 also formed in the wall 5 for enabling the mass of liquid fuel to be withdrawn from the filter 2 in use.

The withdrawal of the mass of liquid fuel from the filter 2 and the forwarding of the liquid fuel to the vehicle engine (not illustrated) is effected with the aid of a solenoid valve 27 which is connected to the outlet aperture 26 and to an inlet (not illustrated) of the engine through respective pipes 28 and 28a and is controlled, in use, in known manner, in accordance with running conditions of the engine.

The solenoid valve 27 is releasably connected directly to the casing 3 of the filter 2 and is disposed in a position overlying and spaced from the wall 5. More particularly, the solenoid valve 27 is connected to the casing 3 by a snap-engagement device 30 including a guide element 31 integral with the wall 5 and a slide element 32 integral with the outer casing of the solenoid valve 27.

The slide element 32 slidably couples with the guide element 31 and is locked to the element 31 in use by a resilient appendage 33 which constitutes part of the device 30, is integral with the element 31 and arranged to snap, in use, over a stop projection 34 carried by the element 32 to keep the slide element 32 in abutment with a pair of stop projections 35 integral with the element 31.

From the above it will be clear that the filter apparatus 1 described above has the following advantages over prior art apparatus.

First of all it has a considerably less bulk as a result not only of the particular geometry of the bracket 12 but also the particular arrangement of the solenoid valve 27 relative to the casing 3.

In addition the filter apparatus 1 described above is considerably lighter in weight than known apparatus, this being a result of the particular manner in which the casing 3 is connected to the bracket 12, which, being considerably lighter than known brackets, contributes little extra weight.

Finally and above all, the fact that the bracket 12 is connected to the filter 2 by a snap engagement enables the connection time to be reduced considerably while, at the same time, enabling a firm and extremely reliable connection to be made from a practical point of view in that this connection is not dependent on the sensitivity of the workman and is invariable whatever the state in which the apparatus 1 operates. In particular, the connections between the filter 2 and the bracket 12 and between the filter 2 and the solenoid valve 27 are extremely reliable even when the apparatus 1 operates in the presence of vibration generated, for example, by the engine.

From the above it will also be apparent that the apparatus 1 described may be modified and varied without falling outside the field of protection of the present invention. In particular, the bracket 12 could be made from a material other than that described and, for example, of plastics material, possible reinforced, and may have a different geometry, for example to satisfy particular conditions of bulk. More particularly, the bracket 12 could have more than two arms not necessarily connected to the same cross-member.

## Claims

1. Filter apparatus (1) for recovering vapour from the fuel in a vehicle, the apparatus (1) comprising a filter member (2) for condensing the vapour to form a corresponding quantity of liquid fuel, having an outer casing (3) and means (12) for connecting the filter member to a vehicle body, the connection means including a bracket (12) adapted to be fixed rigidly to the body and having at least one pair of support arms (13), characterised in that the connection means further include rapid attachment means (7, 15, 21, 22) interposed between the arms (13) and the casing (3) to connect the casing (3) itself to the bracket (12) in a releasable manner.

2. Apparatus according to Claim 1, characterised in that the rapid attachment means (7, 15, 21, 22) are snap-engagement means.

3. Apparatus according to Claim 2, characterised in that, for each arm (13), the attachment means (7, 15, 21, 22) include a seat (7) carried by the casing (3) and an elongate body (15) carried by the respective said arm (13) and adapted to engage the respective seat (7) in an axially slidable manner.

4. Apparatus according to Claim 3, characterised in that the attachment means (7, 15, 21, 22) further include, for each arm (13), retaining means (21, 22, 23, 24) for locking each elongate body (15) releasably in its seat (7).

5. Apparatus according to Claim 4, characterised in that the retaining means (21, 22, 23, 24) include, for each arm (13), at least one tooth (21) associated with one member selected from the outer casing (3) and the elongate body (15) and at least one retaining seat (22) formed in the other member of the outer casing (3) and the elongate body (15) and adapted to be snap-engaged by the respective tooth (21).

6. Apparatus according to Claim 4 or Claim 5, characterised in that the retaining means (21, 22, 23, 24) include, for each arm (13), a first shoulder (23) carried by the respective arm (13) and a second shoulder (24) carried by the outer casing (3); the first shoulder (23) and the second shoulder (24) being adapted to bear against each other.

7. Apparatus according to any one of Claims 3 to 6, characterised in that each elongate body (15) is integral with the respective arm and is constituted by a plate-shaped body.

8. Apparatus according to any one of Claims 3 to 7, characterised in that the outer casing (3) includes a peripheral wall (4) and in that each of the seats (7) is formed on the outside of the peripheral wall (4) and is defined by an elongate body (8) of U-section extending outside the peripheral wall (4) and integral with the outer casing (3).

9. Apparatus according to any one of the preceding claims, characterised in that it includes a solenoid valve (27) for enabling the mass of liquid fuel to be withdrawn from the filter member (2) in use, and further connection means (30) for connecting the solenoid valve (27) directly to the outer casing (3) in a releasable manner; the further connection means (30) being snap-engagement means.

10. Apparatus according to Claim 9, characterised in that the further connection means (30) include first attachment means (31) integral with outer casing (3) and second attachment means (32) carried by the solenoid valve (27).

11. Apparatus according to Claim 10, characterised in that the casing (3) is delimited by at least one substantially flat end wall (5) and in that the first attachment means (31) extend outwardly from the end wall (5).
